# EUROPÄISCHE PATENTSCHRIFT

(11) **EP 0 592 823 B1**
(45) Veröffentlichungstag und Bekanntmachung des Hinweises auf die Patenterteilung: **07.01.1998**
(21) Anmeldenummer: 93114725.0
(22) Anmeldetag: 14.09.1993
(51) Int. Cl.: F16L 37/084

(54) **Lösbarer Steckverbinder für Kunststoffrohrleitungen**
Releasable plug coupling for plastic pipes
Raccord détachable à fiche pour tuyaux en matière plastique

(30) Priorität: 13.10.1992 DE 4234441
(43) Veröffentlichungstag der Anmeldung: 20.04.1994
(73) Patentinhaber: ARMATURENFABRIK HERMANN VOSS GMBH & CO., D-51688 Wipperfürth (DE)
(72) Erfinder: Hester, Hilmar, D-51688 Wipperfürth (DE)
(74) Vertreter: Patentanwälte Dr. Solf & Zapf

(56) Entgegenhaltungen:
- EP-A- 0 310 534
- DE-A- 2 628 727
- FR-A- 1 444 576
- GB-A- 1 024 537
- GB-A- 1 550 624

## Beschreibung

Die vorliegende Erfindung betrifft einen Steckverbinder für Rohrleitungen von Drucksystemen, bestehend aus einem Gehäuseteil und einem in dieses einsteckbaren Steckerteil, das in seinem eingesteckten Zustand innerhalb des Gehäuseteils von einem innerhalb einer umfangsgemäßen inneren Ausnehmung des Gehäuseteils angeordneten Dicht- und Halteelement fixiert und umfangsgemäß abgedichtet wird, wobei das Dicht- und Halteelement einstückig aus einem aus elastomerem Material bestehenden Formring besteht, in dem metallische Halteklammern integriert sind, die mit Halteabschnitten in eine von dem Formring in Anpassung an den Außendurchmesser des Steckerteils gebildete Durchgangsöffnung hineinragen und das Steckerteil fixieren.

Ein derartiger Steckverbinder ist aus der GB-A-1 550 624 bekannt. Zudem enthält auch die EP-A-0 310 534 einen praktisch gleichartigen Stand der Technik.

So beschreibt die GB-A-1 550 624 ein kombiniertes Dicht- und Halteelement, welches aus einem elastischen Dichtring und einem umfangsgemäß geschlossenen Federring besteht.

Dieser Federring weist eine Vielzahl von nach innen ragenden Zähnen auf. Diese Zähne liegen verteilt auf einem Umfangskreis und weisen offensichtlich geradlinige Endkanten auf, die allenfalls tangential am Rohr zum Eingriff gelangen können.

Ähnliches gilt auch bezüglich der EP-A-0 310 534, wobei dort aber einzelne Halteklammern in dem Dichtring eingebettet sind.

Die DE-A-26 28 727 ist insofern als gattungsfremd anzusehen, als das darin beschriebene "Dichtungs- und Schubsicherungselement" keine nach innen in die Durchgangsöffnung des elastischen Ringes ragenden Halteklammern aufweist, sondern vielmehr geriffelte oder verzahnte Walzenkörper, die so in dem Elastomer eingebettet sein sollen, daß ihre Riffelung oder Zahnung auf der Innenseite und auf der Außenseite des Dichtungsringes lediglich freiliegen; ein Überstand ist nicht offenbart.

Ausgehend von dem genannten Stand der Technik liegt der vorliegenden Erfindung die Aufgabe zugrunde, mit kostengünstig herstellbaren Mitteln eine derart verbesserte Fixierung des eingesteckten Steckerteils zu erreichen, daß der Steckverbinder besonders unempfindlich gegen Zug- und Druckbelastungen sowie gegen Schwingungen und Rotation ist.

Erfindungsgemäß wird dies dadurch erreicht, daß das Dicht- und Halteelement kegelstumpfförmig mit einer schräg zur Längsachse verlaufenden Wandung ausgebildet ist, und daß jede Halteklammer im Längsschnitt gesehen U-förmig mit zwei freien U-Schenkeln und einem parallel zur Längsachse verlaufenden U-Steg ausgebildet ist, wobei die freien U-Schenkel den Halteabschnitt und der U-Steg einen Ankerabschnitt bilden, und wobei die Halteklammern in Anpassung an die Umfangsfläche des Steckerteils kreisbogenförmig verlaufende Endkanten aufweisen.

Durch diese Ausgestaltung wird vorteilhafterweise zumindest eine Verdoppelung der Fixierwirkung bzw. Haltekraft jeder Halteklammer erreicht, weil erfindungsgemäß jede Halteklammer zur Fixierung zwei Schenkel mit entsprechenden, in das Steckerteil eingreifenden Endkanten aufweist. Eine zusätzliche Verbesserung der Fixierung wird durch die besondere, kreisbogenförmige Kontur der Endkanten erreicht, indem sich diese über ihre gesamte Länge hinweg in das Steckerteil eindrücken können. Hierdurch reicht sogar eine geringere Anzahl von Halteklammern im Vergleich zum Stand der Technik aus.

Die Erfindung nutzt dabei das an sich bekannte Prinzip, daß die Funktionen Halten und Dichten in einem einzigen elastomeren, ungeschlitzten, ringförmigen Bauteil integriert sind. Der Werkstoff zur Herstellung dieses Einbauteils sollte vorzugsweise aus NBR mit einer Shore-A-Härte von 70 bestehen, und die Halteelemente sollten insbesondere aus nicht rostendem Stahl- oder Messingblech hergestellt sein. Hierbei werden Zug- bzw. Druckbelastungen sowie Schwingungen durch den elastischen Ring aufgefangen, und das Stekkerteil liegt nahezu spielfrei in der Systembohrung. Eine Sicherung gegen Rotation gewährleisten die Halteelemente in Verbindung mit den materialbedingten hohen Reibwerten des Grundkörpers.

Vorteilhafte Ausführungen der Erfindung sind in den Unteransprüchen enthalten.

Anhand der in den beiliegenden Zeichnungen dargestellten Ausführungsbeispiele wird die Erfindung näher erläutert. Es zeigen:
- Fig. 1: eine bevorzugte Ausführungsform eines erfindungsgemäßen Steckverbinders im Längsschnitt, und zwar die obere Hälfte beim Einsteckvorgang und die untere Hälfte unter Zug- bzw. Druckbelastung,
- Fig. 2: ein gemäß Fig. 1 verwendetes Dicht- und Halteelement, und zwar im Teil-Längsschnitt,
- Fig. 3: eine Frontalansicht auf das Dicht- und Halteelement in Pfeilrichtung III gemäß Fig. 2,
- Fig. 4 und 5: Ansichten einer im Dicht- und Halteelement gemäß Fig. 2 verwendeten Halteklammer,
- Fig. 6: eine weitere Ausführungsform eines erfindungsgemäßen Steckverbinders in Abwandlung des Steckverbinders gemäß Fig. 1 im Längsschnitt, und zwar oberer Figurteil beim Einsteckvorgang und unterer Figurteil bei Zug- bzw. Druckbelastung.

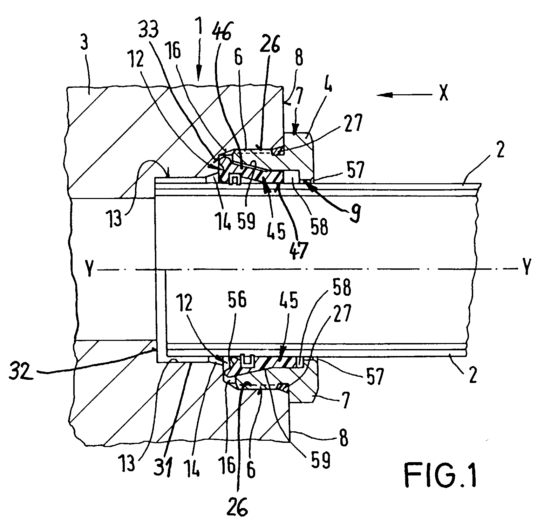

Wie sich aus Fig. 1 ergibt, besteht ein erfindungsgemäßer Steckverbinder aus einem Gehäuseteil 1, das zweiteilig ausgebildet ist, sowie aus einem Steckerteil 2, das im dargestellten Ausführungsbeispiel von einer anzuschließenden Rohrleitung aus Kunststoff gebildet ist. Es liegt jedoch ebenfalls im Rahmen der Erfindung, wenn das Stekkerteil 2 als separates Verbindungsglied für die anzuschließende Rohrleitung dient. Das Gehäuseteil 1 wird von einem Gehäusekörper 3 und einem Verschlußteil 4 gebildet. Dieses Verschlußteil 4 ist im dargestellten Ausführungsbeispiel als Überwurfschraube hergestellt, die in einen Innengewindeabschnitt 6 des Gehäusekörpers 3 eingeschraubt ist, bis die Überwurfschraube 4 mit ihrem Kopfflansch 7 an der diesem gegenüberliegenden Stirnfläche 8 des Gehäusekörpers 3 anliegt. In Längsrichtung der Längsachse Y-Y verläuft mittig durch die Überwurfschraube 4 eine Einsteckbohrung 9.

Der Innengewindeabschnitt 6 ist in einer Stufenbohrung 12 des Gehäusekörpers 3 ausgebildet, die aus einem in Einsteckrichtung X gesehen hinteren Bohrungsabschnitt 13 besteht, dessen Durchmesser dem Außendurchmesser des Steckerteils 2 entspricht und einen sich demgegenüber konisch erweiternden mittleren Übergangsabschnitt 14 aufweist, der in einen vorderen Bohrungsabschnitt 16 übergeht, der an seinem vorderen Ende den Innengewindeabschnitt 6 aufweist.

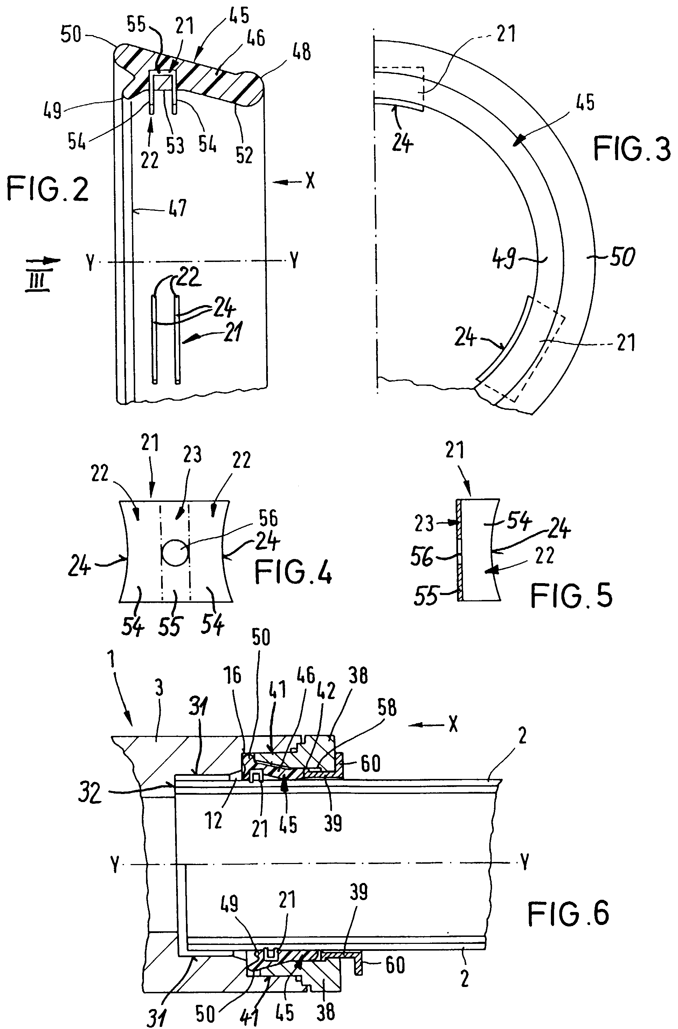

Innerhalb des Gehäusekörpers 3 ist ein ungeschlitztes, elastomeres Dicht- und Halteelement 45 angeordnet, das den zwischen dem in die Einsteckbohrung 9 eingesteckten Stekkerteil 2 und der Überwurfschraube 4 bestehenden Spalt abdichtet. Innerhalb des Dicht- und Halteelements 45 sind mindestens zwei Halteklammern 21 integriert, insbesondere einvulkanisiert, die jeweils mit einem Halteabschnitt 22 in die von dem Dicht- und Halteelement gebildete Ringöffnung hineinragen, wie dies in Fig. 2 gezeigt ist. Wie aus Fig. 3, 4 und 5 zu erkennen ist, verlaufen die endseitigen, radial nach innen gerichteten Kanten 24 der Halteabschnitte 22 kreisbogenförmig und zwar in Anpassung an die Umfangsfläche des Steckerteils 2.

Durch das Einstecken des Steckerteils 2 in die Überwurfschraube 4 (Verschlußteil) wird das Dicht- und Halteelement 45 verformt, wodurch die Halteabschnitte 22 mit Vorspannung auf dem Steckerteil 2 aufliegen. Erfolgt nun eine Krafteinwirkung auf das Steckerteil 2 in entgegengesetzter Richtung zur Einsteckrichtung X, wo wird das Dicht- und Halteelement 45 vom dem Steckerteil 2 mitgenommen, wodurch eine weitere Verformung erfolgt, was die Vorspannkraft, die auf die Halteklammern 21 wirkt, erhöht, wodurch die Halteabschnitte 22 in die Wandung des Steckerteils 2 eingedrückt werden. Hierdurch wird das Steckerteil 2 innerhalb des Gehäuseteils 1 fixiert und kann nicht aus dem Gehäuseteil 1 entweichen.

Zweckmäßigerweise ist am Übergang zwischen dem Außengewindeabschnitt 26 der Überwurfschraube 4 und dem Kopfflansch 7 ein Dichtungsring 27 angeordnet, wodurch eine Abdichtung im Bereich des Innengewindeabschnittes 5 erfolgt.

Erfindungsgemäß sind mindestens zwei diametral einander gegenüberliegende Halteklammern 21 in dem Dicht- und Halteelement vorgesehen. Zweckmäßigerweise werden jedoch drei jeweils um 120° zueinander versetzte Halteklammern 21 in dem Dicht- und Halteelement 45 ausgebildet.

Die Stufenbohrung 12 des Gehäusekörpers 3 besitzt einen inneren Bohrungsabschnitt 31 mit einem Durchmesser, der dem Außendurchmesser des Steckerteils 2 angepaßt ist. Eine Stirnfläche 32 des Bohrungsabschnittes 31 dient als Endanschlag für das Steckerteil 2.

In Fig. 6 ist das Verschlußteil in Abweichung von Fig. 1 nicht als Überwurfschraube, sondern als Verschlußstopfen 38 mit einer inneren, in und gegen die Einsteckrichtung X verschiebbaren Verschiebehülse 39 ausgebildet, weshalb die Stufenbohrung 12 anstelle eines Gewindeabschnittes einen zylindrischen Aufnahmeabschnitt 41 für den Verschlußstopfen 38 besitzt, in dem der Verschlußstopfen 38 beispielsweise eingeklebt bzw. stoffschlüssig eingesetzt ist. Der Innendurchmesser der Verschiebehülse 39 ist dem Außendurchmesser des Steckerteils 2 angepaßt. Die Verschiebehülse 39 weist an ihrem inneren Ende einen Ringanschlag 42 auf, dessen Außendurchmesser dem Durchmesser des Aufnahmeabschnittes 41 entspricht und in diesem Aufnahmeabschnitt 41 verschiebbar geführt ist. Die Verschiebehülse 39 ist mit ihrem Hülsenabschnitt, der in Einsteckrichtung vor dem Ringanschlag 42 liegt, innerhalb des Verschlußstopfens 38 geführt.

Das ungeschlitzte Dicht- und Halteelement 45 besitzt eine kegelstumpfförmige äußere Gestalt. Dieses aus elastomerem Material bestehende Dicht- und Halteelement 45 besitzt im Querschnitt gesehen - siehe insbesondere Fig. 2 - eine schräg zur Längsachse Y-Y verlaufende Wandung 46 sowie eine Durchgangsöffnung 47 in Anpassung an den Außendurchmesser 45 des Steckerteils 2. Der Außendurchmesser des Dicht- und Halteelements 45 ist in Einsteckrichtung X gesehen im vorderen Bereich kleiner als am Ende. An ihrem vorderen Ende weist die Wandung 46 einen ringförmigen Wulst 48 auf, der entsprechend einem toroid- bzw. torusförmigen Dichtelement dimensioniert ist und dessen Wirkung besitzt, und innerhalb der Durchgangsöffnung 47 ist an der Innenseite der schräg verlaufenden Wandung 46 eine ringförmige Lippe 49 angeformt, die schräg zur Längsachse in Einsteckrichtung verläuft, wobei der Durchmesser der Öffnung 47 dem Durchmesser der Öffnung des Dicht- und Halteelementes 45 im Bereich des Wulstes 48 entspricht. Die Lippe 49 endet - in Einsteckrichtung gesehen - vor dem hinteren Ende der Wandung 46, das als Lippe 50 ausgebildet ist. Zwischen der Lippe 49 und einem vorderen schrägen Wandungsabschnitt 52 ist ein zylindrischer Wandungsabschnitt 53 ausgebildet, dessen Durchmesser größer ist als der Durchmesser des Dicht- und Halteelementes 45 im Bereich der Lippe 49 und des Wulstes 48. Im Bereich dieses zylindrischen Wandungsabschnittes 53 sind die Halteklammern 21 in der Wandung 46 integriert. Jede Halteklammer 21 ragt mit ihrem Halteabschnitt 22 in die Durchgangsöffnung 47 in radialer Richtung senkrecht zur Längsachse Y-Y hinein, indem sie das Ende der Lippe 49 überragt. Jede dieser Halteklammern 21 ist - im Längsschnitt gesehen - U-förmig ausgebildet, wobei die freien U-Schenkel 54 den Halteabschnitt 2 bilden und der parallel zur Längsachse Y-Y verlaufende U-Steg 55 den Ankerabschnitt 23.

In Fig. 4 ist die Halteklammer als ebenes Blechteil vor der Verformung in ihre endgültige U-Form dargestellt. In dem U-Steg 55 ist ein Loch 56 ausgebildet, das von dem Material der Wandung 46 durchdrungen wird. Dieses Dicht- und Halteelement 45 ist, wie in Fig. 1 gezeigt, zwischen dem Gehäusekörper 3 und dem Verschlußteil 4 eingeschlossen. Das Verschlußteil 4 ist als Überwurfschraube ausgebildet und in den Innengewindeabschnitt 6 des Gehäusekörpers 3 eingeschraubt. Der Innengewindeabschnitt 6 bildet das äußere Ende der Stufenbohrung 12, wobei der vordere Bohrungsabschnitt 16 der Stufenbohrung 12 die Umfangswandung einer Ringkammer darstellt, die die Lippe 50 des Dicht- und Halteelementes 45 aufnimmt. Die Überwurfschraube 4 weist eine Einsteckbohrung 9 aus drei Bohrungsabschnitten auf, und zwar einen in Einsteckrichtung vorderen Bohrungsabschnitt 47, dessen Durchmesser dem Außendurchmesser des Steckerteils 2 in etwa entspricht, einen mittleren, im Durchmesser vergrößerten Bohrungsabschnitt 58 sowie einen sich von diesem aus konisch erweiternden Endabschnitt 59. Die Neigungsschräge des Endabschnittes 59 ist der Neigung der Wandung 46 des Dicht- und Halteelementes 45 angepaßt.

Die Funktion ist wie folgt: Das Dicht- und Halteelement 45 wird zwischen der Überwurfschraube 4 und dem Gehäusekörper 3 eingeschlossen, wobei der Endabschnitt 58 an der Wandung 46 anliegt und der Wulst 48 im Bereich des mittleren Bohrungsabschnittes 58 gelegen ist, wobei dann der unbelastete Zustand vorliegt. Beim Einstecken des Steckerteils 2 wird das Dicht- und Halteelement 45 in Einsteckrichtung X bewegt, wobei durch die Formgebung der oberen Lippe 50, der Wandung 46 und die Abstützung an der Ringstufenfläche 33 der Stufenbohrung 12 eine Aufweitung des Dicht- und Halteelementes 45 derart erfolgt, daß die Halteklammern 21 das Steckerteil 2 bzw. die Rohrleitung zum Einstecken freigeben. Die Halteklammern 21 sitzen unter Vorspannung auf der Rohrleitung. Erfolgt nun eine Zug- bzw. Druckbelastung, so wird das Dicht- und Halteelement 45 gegen den konischen Endabschnitt 59 der Durchsteckbohrung gepreßt, wobei der Wulst 48, der als O-Ring wirkt, die im Bereich des mittleren Abschnitts 58 gebildete Kammer der Durchsteckbohrung ausfüllt sowie die Halteklammern 21 - durch die Lippe 49 begrenzt - sich in das Steckerteidl 2 einschneiden. Gelöst wird diese Verbindung durch ein Ausdrehen der Überwurfschraube.

Gemäß Fig. 6, wobei das Verschlußteil aus dem Verschlußstopfen 38 sowie der Verschiebehülse 39 besteht, besitzt die Verschiebehülse 39 den Ringanschlag 42, mit dem sie innerhalb des Verschlußstopfens 38 im verlängerten mittleren Bohrungsabschnitt 58 des Verschlußstopfens geführt ist. In der Einsteckstellung wird die Verschiebehülse 39 gegen das Dicht- und Halteelement 45 in Einsteckrichtung X verschoben, so daß das Dicht- und Halteelement 45 derart - wie vorstehend beschrieben - verformt wird, daß die Halteklammern 21 das Steckerteil freigeben. Bei Zug- bzw. Druckbelastung verschiebt sich die Verschiebehülse 39 entgegengesetzt zur Einsteckrichtung X, und das Dicht- und Halteelement 45 wird derart verpreßt, daß sich die Halteklammern 21 in das Steckerteil 2 eingraben. Die Verschiebehülse 39 besitzt einen äußeren Ringflansch 50, der als Handhabe und Einschubbegrenzung dient.

Der erfindungsgemäße Steckverbindung besitzt kleine Baumaße, und es wird das Rohrspiel in Längsrichtung verringert. Die Zahl der Funktionselemente ist reduziert, da auch auf zusätzliche Kappen, Dichtungen usw. verzichtet werden kann. Des weiteren entfällt ein Nachschneiden oder Abschneiden der Rohrleitung und es besteht keine Bruchgefahr des Halteelementes.

## Patentansprüche

1. Steckverbinder für Rohrleitungen von Drucksystemen, bestehend aus einem Gehäuseteil (1) und einem in dieses einsteckbaren Steckerteil (2), das in seinem eingesteckten Zustand innerhalb des Gehäuseteils (1) von einem innerhalb einer umfangsgemäßen inneren Ausnehmung des Gehäuseteils (1) angeordneten Dicht- und Halteelement (45) fixiert und umfangsgemäß abgedichtet wird, wobei das Dicht- und Halteelement (45) einstückig aus einem aus elastomerem Material bestehenden Formring besteht, in dem metallische Halteklammern (21) integriert sind, die mit Halteabschnitten (22) in eine von dem Formring in Anpassung an den Außendurchmesser des Steckerteils (2) gebildete Durchgangsöffnung (47) hineinragen und das Steckerteil (2) fixieren,
**dadurch gekennzeichnet**, daß das Dicht- und Halteelement (45) kegelstumpfförmig mit einer schräg zur Längsachse (Y-Y) verlaufenden Wandung (46) ausgebildet ist, und daß jede Halteklammer (21) im Längsschnitt gesehen U-förmig mit zwei freien U-Schenkeln (54) und einem parallel zur Längsachse (Y-Y) verlaufenden U-Steg (55) ausgebildet ist, wobei die freien U-Schenkel (54) den Halteabschnitt (22) und der U-Steg (55) einen Ankerabschnitt (23) bilden, und wobei die Halteklammern (21) in Anpassung an die Umfangsfläche des Steckerteils (2) kreisbogenförmig verlaufende Endkanten (24) aufweisen.

2. Steckverbinder nach Anspruch 1,
**dadurch gekennzeichnet**, daß der das Dicht- und Halteelement (45) bildende Formring ungeschlitzt ist.

3. Steckverbinder nach Anspruch 1 oder 2,
**dadurch gekennzeichnet**, daß die Halteklammern (21) aus Metall, insbesondere aus nichtrostendem Stahl oder Messing, bestehen und insbesondere als Biege-Stanzteile hergestellt sind.

4. Steckverbinder nach einem der Ansprüche 1 bis 3,
**dadurch gekennzeichnet**, daß der Außendurchmesser des Dicht- und Halteelements (45) in Einsteckrichtung gesehen im vorderen Bereich kleiner ist als am Ende und die schräge Wandung (46) an ihrem vorderen Ende eine ringförmige Wulst (48) zur Ausbildung eines toroidförmigen Dichtungselementes aufweist, und innerhalb der Durchgangsöffnung (47) an der Innenseite der schräg verlaufenden Wandung (46) eine ringförmige Lippe (49) angeformt ist, die schräg zur Längsachse in Einsteckrichtung (X) verläuft und in Einsteckrichtung (X) gesehen vor dem hinteren Ende der Wandung (46) endet.

5. Steckverbinder nach Anspruch 4,
**dadurch gekennzeichnet**, daß zwischen der Lippe (49) und einem vorderen, inneren schrägen Wandungsabschnitt (52) ein zylindrischer Wandungsabschnitt (53) ausgebildet ist, dessen Durchmesser größer ist als der Durchmesser des Dicht- und Halteelementes (45) im Bereich der Lippe (49) und des Wulstes (48) sowie im Bereich dieses zylindrischen Wandungsabschnittes (53) die Halteklammern (21) innerhalb der Wandung (46) ingetriert sind und mit ihren Halteabschnitten (22) in die Durchgangsöffnung (47) hineinragen.

6. Steckverbinder nach einem der Ansprüche 1 bis 5,
**dadurch gekennzeichnet**, daß jede Halteklammer (21) in dem U-Steg (55) ein Loch (56) aufweist, das von dem Wandungsmaterial der Wandung (46) durchdrungen ist.

7. Steckverbinder nach einem der Ansprüche 1 bis 6,
**dadurch gekennzeichnet**, daß das Gehäuseteil (1) von einem Gehäusekörper (3) und einem Verschlußteil (4) gebildet ist.

8. Steckverbinder nach Anspruch 7,
**dadurch gekennzeichnet**, daß das Verschlußteil (4) als Überwurfschraube ausgebildet ist, die in einen Innengewindeabschnitt (6) des Gehäusekörpers (3) eingeschraubt ist, wobei durch die Überwurf schraube eine Einsteckbohrung (9) in Längsachsenrichtung verläuft.

9. Steckverbinder nach Anspruch 8,
**dadurch gekennzeichnet**, daß der Innengewindeabschnitt (6) des Gehäusekörpers (3) am Ende einer Stufenbohrung (12) des Gehäusekörpers (3) ausgebildet ist, die aus einem in Einsteckrichtung (X) gesehen hinteren Bohrungsabschnitt (13) besteht, dessen Durchmesser dem Innendurchmesser des Steckerteils (2) entspricht, und einen sich demgegenüber konisch erweiternden mittleren Übergangsabschnitt (14) aufweist, der in einen vorderen Bohrungsabschnitt (16) übergeht, der an seinem vorderen Ende den Innengewindeabschnitt (6) aufweist.

10. Steckverbinder nach einem der Ansprüche 1 bis 9,
**dadurch gekennzeichnet**, daß mindestens zwei diametral einander gegenüberliegende Halteklammern (21) vorgesehen sind, jedoch zweckmäßigerweise drei jeweils um 120° zueinander versetzte Halteklammern (21) in dem Dicht- und Halteelement (45) integriert sind.

11. Steckverbinder nach einem der Ansprüche 7 bis 10
**dadurch gekennzeichnet**, daß das Dicht- und Halteelement (45) zwischen dem Gehäusekörper (3) und dem Verschlußteil eingeschlossen ist.

12. Steckverbinder nach einem der Ansprüche 9 bis 11,
**dadurch gekennzeichnet**, daß der Bohrungsabschnitt (16) der Stufenbohrung (12) die Umfangswandung einer Ringkammer bildet, die das als Dichtlippe (50) ausgebildete innere Ende des Dicht- und Halteelementes (45) aufnimmt.

13. Steckverbinder nach einem der Ansprüche 1 bis 12,
**dadurch gekennzeichnet**, daß die Überwurfschraube (4) eine Einsteckbohrung (9) aus drei Bohrungsabschnitten aufweist, und zwar aus einem in Einsteckrichtung vorderen Bohrungsabschnitt (57) mit einem dem Außendurchmesser des Steckerteils entsprechenden Durchmesser, einem mittleren im Durchmesser vergrößerten Bohrungsabschnitt (58) sowie einem sich von diesem aus konisch erweiterden Endabschnitt (59), dessen Neigungsschräge der Neigung der schrägen Wandung (46) des Dicht- und Halteelementes (45) angepaßt ist.

14. Steckverbinder nach Anspruch 7,
**dadurch gekennzeichnet**, daß das Verschlußteil (4) zweiteilig ausgebildet ist und aus einem Verschlußstopfen (38) und einer inneren, zum Lösen des Steckerteils (2) in Einsteckrichtung (X) gegen das Dicht- und Halteelement (45) verschiebbaren Verschiebehülse (39) besteht, wobei der Verschlußstopfen (38) beispielsweise durch Verkleben oder durch Verschweißen stoffschlüssig eingesetzt ist.

15. Steckverbinder nach Anspruch 14,
**dadurch gekennzeichnet**, daß der Innendurchmesser der Verschiebehülse (39) dem Außendurchmesser des Steckerteils (2) angepaßt ist, und die Verschiebehülse (39) an ihrem inneren Ende einen Ringanschlag (42) besitzt, dessen Außendurchmesser dem Durchmesser eines Bohrungsabschnittes (58) des Verschlußstopfens (39) angepaßt ist und in diesem geführt wird.

## Claims

1. Plug-in connector for piping of pressure systems, comprising a housing part (1) and a plug part (2) which can be plugged into the latter and, in its plugged-in state, is fixed and circumferentially sealed inside the housing part (1) by a sealing and retaining element (45) arranged inside a circumferential inner recess of the housing part (1), the sealing and retaining element (45) comprising, in one piece, a shaped ring composed of an elastomeric material in which metallic retaining clips (21) are integrated, the retaining clips projecting by retaining portions (22) into a passage opening (47) formed by the shaped ring so as to be adapted to the outside diameter of the plug part (2) and fixing the plug part (2), characterised in that the sealing and retaining element (45) is frustoconically constructed with a wall (46) running obliquely to the longitudinal axis (Y-Y), and in that each retaining clip (21) is constructed, when seen in longitudinal section, U-shaped with two free U arms (54) and a U web (55) running parallel to the longitudinal axis (Y-Y), the free U arms (54) forming the retaining portion (22) and the U web (55) forming an anchor portion (23), and the retaining clips (21) having end edges (24) running in the shape of an arc of a circle so as to be adapted to the circumferential surface of the plug part (2).

2. Plug-in connector according to Claim 1, characterised in that the shaped ring forming the sealing and retaining element (45) is unslotted.

3. Plug-in connector according to Claim 1 or 2, characterised in that the retaining clips (21) are composed of metal, in particular of stainless steel or brass, and are produced in particular as bent stampings.

4. Plug-in connector according to one of Claims 1 to 3, characterised in that the outside diameter of the sealing and retaining element (45) is, when seen in the plug-in direction, smaller in the front region than at the end and the oblique wall (46) has at its front end an annular bead (48) for the formation of a toroidal sealing element, and an annular lip (49) is integrally formed on the inside of the obliquely running wall (46) inside the passage opening (47), the lip running obliquely to the longitudinal axis in the plug-in direction (X) and ending, when seen in the plug-in direction (X), before the rear end of the wall (46).

5. Plug-in connector according to Claim 4, characterised in that a cylindrical wall portion (53) is formed between the lip (49) and a front, inner oblique wall portion (52), the diameter of the cylindrical wall portion being greater than the diameter of the sealing and retaining element (45) in the region of the lip (49) and of the bead (48), and the retaining clips (21) are integrated in the wall (46) and project by their retaining portions (22) into the passage opening (47) in the region of this cylindrical wall portion (53).

6. Plug-in connector according to one of claims 1 to 5, characterised in that each retaining clip (21) has in the U web (55) a hole (56) which is penetrated by the wall material of the wall (46).

7. Plug-in connector according to one of Claims 1 to 6, characterised in that the housing part (1) is formed by a housing body (3) and a closure part (4).

8. Plug-in connector according to Claim 7, characterised in that the closure part (4) is constructed as a male pipe fitting which is screwed into an internally threaded portion (6) of the housing body (3), a plug-in bore (9) running through the male pipe fitting in the direction of the longitudinal axis.

9. Plug-in connector according to Claim 8, characterised in that the internally threaded portion (6) of the housing body (3) is formed at the end of a stepped bore (12) of the housing body (3), the stepped bore comprising a bore portion (13) at the rear when seen in the plug-in direction (X), the diameter of which corresponds to the inside diameter of the plug part (2), and has a central transition portion (14) which widens conically with respect to the bore portion and merges into a front bore portion (16) having the internally threaded portion (6) at its front end.

10. Plug-in connector according to one of Claims 1 to 9, characterised in that at least two diametrically mutually opposite retaining clips (21) are provided, although expediently three retaining clips (21), each offset by 120° with respect to one another, are integrated in the sealing and retaining element (45).

11. Plug-in connector according to one of Claims 7 to 10, characterised in that the sealing and retaining element (45) is enclosed between the housing body (3) and the closure part.

12. Plug-in connector according to one of Claims 9 to 11, characterised in that the bore portion (16) of the stepped bore (12) forms the circumferential wall of an annular chamber which receives the inner end, constructed as a sealing lip (50), of the sealing and retaining element (45).

13. Plug-in connector according to one of Claims 1 to 12, characterised in that the male pipe fitting (4) has a plug-in bore (9) comprising three bore portions, namely a bore portion (57) at the front in the plug-in direction having a diameter corresponding to the outside diameter of the plug part, a central bore portion (58) of increased diameter and an end portion (59) which widens conically from the latter and the obliquity of the slope of which is adapted to the slope of the oblique wall (46) of the sealing and retaining element (45).

14. Plug-in connector according to Claim 7, characterised in that the closure part (4) is constructed in two parts and comprises a closure stopper (38) and an inner sliding sleeve (39) slidable against the sealing and retaining element (45) in the plug-in direction (X) to release the plug part (2), the closure stopper (38) being inserted in materially joined fashion, for example by adhesive bonding or by welding.

15. Plug-in connector according to Claim 14, characterised in that the inside diameter of the sliding sleeve (39) is adapted to the outside diameter of the plug part (2), and the sliding sleeve (39) has at its inner end an annular stop (42), the outside diameter of which is adapted to the diameter of a bore portion (58) of the closure stopper (39) [sic] and is guided therein.

## Revendications

1. Connecteur à fiche pour conduits tubulaires de systèmes de pression, comprenant un élément de boîtier (1) et un élément de fiche (2) enfichable dans celui-ci, l'élément de fiche étant, à l'état enfiché, maintenu et étanché sur sa périphérie dans l'élément de boîtier (1) par un élément de maintien et d'étanchéité (45) disposé dans un évidement périphérique intérieur de l'élément (1), cet élément de maintien et d'étanchéité (45) étant constitué par une bague moulée d'une pièce en une matière élastomère dans laquelle sont intégrées des pinces de maintien métalliques (21), des portions de maintien (22) de ces pinces faisant saillie dans une ouverture de passage (47) formée par la bague moulée en conformité avec le diamètre extérieur de l'élément de fiche (2), et immobilisant ce dernier,
caractérisé en ce que l'élément d'étanchéité et de maintien (45) a une forme tronconique, et présente une paroi (46) qui s'étend obliquement par rapport à l'axe longitudinal (Y-Y), et en ce que chaque pince de maintien (21) a en section longitudinale la forme d'un U, et comporte deux bras (54), et une entretoise (55) qui s'étend parallèlement à l'axe longitudinal (Y-Y), les bras libres du U (54) formant la portion de maintien (22), et l'entretoise du U (55), formant une portion d'armature (23), les pinces de maintien (21) présentant des bords d'extrémité (24) en forme d'arc de cercle adaptés à la surface périphérique de l'élément de fiche (2).

2. Connecteur à fiche selon la revendication 1,
caractérisé en ce que la bague moulée qui constitue l'élément d'étanchéité et de maintien (45) n'est pas fendue.

3. Connecteur à fiche selon la revendication 1 ou 2,
caractérisé en ce que les pinces de maintien (21) sont réalisées en métal, en particulier en acier inoxydable ou en laiton, et sont fabriquées par découpe et pliage.

4. Connecteur à fiche selon l'une des revendications 1 à 3,
caractérisé en ce que, vu dans la direction d'enfichage, le diamètre extérieur de l'élément d'étanchéité et de maintien (45) est plus petit dans la région antérieure qu'à l'extrémité, en ce que la paroi oblique (46) présente à son extrémité antérieure un bourrelet annulaire (48) pour former un élément d'étanchéité toroïdal, et en ce qu'à l'intérieur de l'ouverture de passage (47), une lèvre annulaire est venue par moulage sur la face intérieure de la paroi oblique (46), cette lèvre s'étendant obliquement à l'axe longitudinal dans la direction d'enfichage (X) et se terminant, vue dans la direction d'enfichage (X), avant l'extrémité postérieure de la paroi (46).

5. Connecteur à fiche selon la revendication 4,
caractérisé en ce que, entre la lèvre (49) et une portion de paroi antérieure intérieure oblique (52), une portion de paroi cylindrique (53) a été formée dont le diamètre est supérieur au diamètre de l'élément d'étanchéité et de maintien (45) dans la région de la lèvre (49) et du bourrelet (48), les pinces de maintien (21) étant intégrées dans la paroi (46) à l'intérieur de la région de la portion de paroi cylindrique (53), leurs portions de maintien (22) faisant saillie dans l'ouverture de passage (47).

6. Connecteur à fiche selonl'une des revendications 1 à 5,
caractérisé en ce que chaque pince de maintien (21) présente dans l'entretoise du U (55) un trou (56) dans lequel pénètre la matière de la paroi (46).

7. Connecteur à fiche selon l'une des revendications 1 à 6,
caractérisé en ce que l'élément de boîtier (1) est formé par un corps de boîtier (3) et un élément de fermeture (4).

8. Connecteur à fiche selon la revendication 7,
cartactérisé en ce que l'élément de fermeture (4) a la forme d'une vis chapeau vissée dans une portion taraudée (6) du corps de boîtier (3), un alésage d'enfichage (9) s'étendant à travers la vis chapeau dans la direction de l'axe longitudinal.

9. Connecteur à fiche selon la revendication 8,
caractérisé en ce que la portion taraudée (6) du corps de boîtier (3) est formée à l'extrémité d'un alésage à redans (12) du corps de boîtier (3) qui, vu dans la direction d'enfichage (X) consiste en une portion d'alésage postérieure (13) dont le diamètre correspond au diamètre intérieur de l'élément de fiche (2), et une portion de transition (14) intermédiaire, coniquement élargie par rapport à la première, cette portion étant prolongée par une portion d'alésage antérieure (16) qui présente à son extrémité antérieure la portion taraudée (6).

10. Connecteur à fiche selon l'une des revendications 1 à 9,
caractérisé en ce qu'au moins deux pinces de maintien (21) diamétralement opposées, mais avantageusement trois pinces de maintien (21) respectivement décalées entre elles de 120° sont intégrées dans l'élément d'étanchéité et de maintien (45).

11. Connecteur à fiche selon l'une des revendications 7 à 10,
caractérisé en ce que l'élément d'étanchéité et de maintien (45) est enfermé entre le corps de boîtier (3) et l'élément de fermeture.

12. Connecteur à fiche selon l'une des revendications 9 à 11,
caractérisé en ce que la portion d'alésage (16) de l'alésage à redans (12) forme la paroi périphérique d'une chambre annulaire qui loge l'extrémité intérieure en forme de lèvre d'étanchéité (50) de l'élément d'étanchéité et de maintien (45).

13. Connecteur à fiche selon l'une des revendications 1 à 12,
caractérisé en ce que la vis chapeau (4) présente un alésage d'enfichage (9) comportant trois portions, à savoir une portion (57) antérieure dans la direction d'enfichage dont le diamètre correspond au diamètre extérieur de l'élément de fiche, une portion intermédiaire (58) de plus grand diamètre, et une portion terminale (59) qui s'élargit coniquement, et dont la pente est adaptée à l'inclinaison de la paroi oblique (46) de l'élément d'étanchéité et de maintien (45).

14. Connecteur à fiche selon la revendication 7,
caractérisé en ce que l'élément de fermeture (4) est réalisé en deux parties, à savoir un bouchon de fermeture (38), et un manchon coulissant interne (39) qui peut coulisser dans la direction d'enfichage (X) par rapport à l'élément d'étanchéité et de maintien (45) pour desserrer l'élément de fiche (2), le bouchon de fermeture (38) étant inséré par matière, par exemple par collage ou soudage.

15. Connecteur à fiche selon la revendication 14,
caractérisé en ce que le diamètre intérieur du manchon coulissant (39) est adapté au diamètre extérieur de l'élément de fiche (2), et que le manchon coulissant (39) comporte à son extrémité intérieure une butée annulaire (42) dont le diamètre extérieur est adapté au diamètre d'une section d'alésage (58) du bouchon de fermeture (39), et qui est guidée dans celui-ci.
